# EUROPEAN PATENT SPECIFICATION

(11) **EP 2 999 147 B1**
(45) Date of publication and mention of the grant of the patent: **26.04.2017**
(21) Application number: 14819404.6
(22) Date of filing: 04.07.2014
(51) Int. Cl.: H04B 17/00, H04B 17/391

(54) **METHOD AND DEVICE FOR GENERATING SIMULATED INTERFERENCE**
VERFAHREN UND VORRICHTUNG ZUR ERZEUGUNG EINER SIMULIERTEN INTERFERENZ
PROCÉDÉ ET DISPOSITIF PERMETTANT DE GÉNÉRER UN BROUILLAGE SIMULÉ

(30) Priority: 05.07.2013 CN 201310283161
(43) Date of publication of application: 23.03.2016
(73) Proprietor: Huawei Technologies Co., Ltd., Longgang District Shenzhen, Guangdong 518129 (CN)
(72) Inventor: ZHU, Xiaolong, Shenzhen Guangdong 518129 (CN); WANG, Minghua, Shenzhen Guangdong 518129 (CN)
(74) Representative: Pfenning, Meinig & Partner mbB
(86) International application number: PCT/CN2014/081645
(87) International publication number: WO 2015/000432

(56) References cited:
- CN-A- 102 255 689
- CN-A- 102 742 175
- CN-A- 103 125 083
- CN-A- 103 188 827
- CN-A- 103 368 670
- US-B1- 8 086 187
- QUALCOMM INCORPORATED: "Considerations on Advanced Receivers for Inter-Cell Interference Mitigation", 3GPP DRAFT; R4-114971, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG4, no. Zhuhai; 20111010, 4 October 2011 (2011-10-04), XP050544397, [retrieved on 2011-10-04]
- HELKA-LIINA MAATTANEN ET AL: "Performance Evaluations for Multiuser CQI Enhancements for LTE-Advanced", VEHICULAR TECHNOLOGY CONFERENCE (VTC SPRING), 2011 IEEE 73RD, IEEE, 15 May 2011 (2011-05-15), pages 1-5, XP031897092, DOI: 10.1109/VETECS.2011.5956693 ISBN: 978-1-4244-8332-7

## Description

### TECHNICAL FIELD

The present invention relates to the field of communications technologies, and in particular, to a method and an apparatus for generating a simulated interference.

### BACKGROUND

A Long Term Evolution (LTE, Long Term Evolution) system supports multiple-input multiple-output (MIMO, Multiple-Input Multiple-Output) transmission. Based on traditional transmission in a time domain and a frequency domain, spatial dimension division is added in this technology, to provide higher flexibility for downlink transmission. LTE physical layer specifications of the 3rd Generation Partnership Project (3GPP, 3rd Generation Partnership Project) Release 8 and Release 9 provide multiple transmission technologies, such as open-loop downlink transmit diversity, open-loop spatial multiplexing, closed-loop spatial multiplexing, and beam forming, to adapt to different system configuration, user equipment (UE, User Equipment) capabilities, and channel environments.

In a commercial LTE system, in addition to a serving cell, a neighboring cell generally has a specific quantity of user equipments that are performing data transmission. To better evaluate performance of MIMO in a multi-cell scenario, a co-channel interference among cells needs to be simulated by means of neighboring cell loading. Generally, neighboring cell loading is implemented in two manners: The first one is to generate an interference in the neighboring cell by using a real user equipment, and the second one is to generate an interference by using a simulated load mode.

3GPP draft document R4-114971 titled "Considerations on Advanced Receivers for Inter-Cell Interference Mitigation" presented at 3PGG TSG-RAN WG4 meeting #60bis in Zhuhai; discusses evaluation scenerios, interference models and performance metrics for the evaluation of advanced receivers.

Helka-Liina Määttänen et al discuss in "Performance Evaluations for Multiuser CQI Enhancements for LTE-Advanced" published in VEHICULAR TECHNOLOGY CONFERENCE (VTC SPRING), 2011 IEEE 73^{RD} the viability of additional multiuser channel feedback including throughut simulation results with statistical interference modeling.

US 8086187 B1 discusses a method to simulate performance of a communication system including providing a list of interference components to a user, receiving from the user selections of interference components from the list of the interference components, performing an analysis based on the user selections of the interference components and rendering a result of the analysis.

However, properties of interference signals generated by using different transmission technologies are different. For example, the open-loop transmit diversity technology transmits only a single code word; the closed-loop spatial multiplexing may transmit one to two code words and multiple data streams, and an interference signal has directivity to some extent; and an interference signal of the beam forming technology also has directivity to some extent. Impact of interference signals generated by using different transmission technologies is also different. Under a condition of same power, more layers of spatial multiplexing indicate severer impact of an interference. For example, impact of an interference source of spatial multiplexing is greater than impact of an interference source of transmit diversity.

That is, how to generate a simulated interference and a property of an interference source have significant impact on system performance. An existing method for generating a simulated interference uses a single single-stream transmission scheme to generate a simulated interference. This is equivalent to that there is only one interference user equipment, or although there are multiple interference user equipments, all interference user equipments have a unique interference characteristic. That is, there is only a single code word, a rank is equal to 1, an interference has no directivity, and in addition, there is an obvious difference between a simulated interference and an interference of a real user equipment, so that performance of a commercial system cannot be objectively evaluated.

### SUMMARY

Embodiments of the present invention provide a method and an apparatus for generating a simulated interference, which are used to obtain a simulated interference of which an interference characteristic is consistent with an interference characteristic of a real user equipment, thereby more objectively reflecting system performance in different scenarios, enhancing a technical evaluation effect, and improving technical evaluation efficiency. The invention is defined by the claims. In the following, aspects useful for understanding the invention are provided.In view of this, according to a first aspect of the present invention, a method for generating a simulated interference is provided, and the method includes:
setting one or more simulated load templates and separately configuring interference characteristic parameters on the one or more simulated load templates, where one simulated load template is used to simulate one interference or a type of interference that has a same interference characteristic; and
generating a simulated interference by using the interference characteristic parameters configured on the one or more simulated load templates, where if multiple simulated load templates are set, polling is performed, in a time domain and/or a frequency domain, on interferences generated by the multiple simulated load templates by means of simulation.

In a first possible implementation manner of the first aspect, the interference characteristic parameters include a transmission mode, a resource utilization rate, a Rank, a precoding matrix indicator PMI, a modulation and coding scheme MCS, and a time domain polling granularity or a frequency domain polling granularity of the one or more simulated load templates, where
the configuring interference characteristic parameters on the one or more simulated load templates includes: separately configuring the transmission mode, the resource utilization rate, the Rank, the PMI, the MCS, and the time domain polling granularity or the frequency domain polling granularity of the one or more simulated load templates.

With reference to the first possible implementation manner of the first aspect, in a second possible implementation manner,
the configuring the transmission mode of the one or more simulated load templates includes: configuring the transmission mode or a transmission scheme, and accepting or not accepting a restriction of a characteristic license of an interference cell;
the configuring the resource utilization rate of the one or more simulated load templates includes: configuring a resource block RB utilization rate and a transmit power utilization rate of the interference cell, where if an RB utilization rate or a transmit power utilization rate that is scheduled by the interference cell and is of a real user equipment UE is lower than a preset threshold, simulated load is scheduled; or if an RB utilization rate or a transmit power utilization rate that is scheduled by the interference cell and is of a real UE is higher than a preset threshold, simulated load is invalid;
the configuring the Rank and the PMI of the one or more simulated load templates includes: according to the configured transmission mode, setting each of a Rank and a PMI that are corresponding to the transmission mode to a specific value or a preset value range;
the setting the MCS of the one or more simulated load templates includes: configuring the MCS of the one or more simulated load templates to a specific value or a preset value range; and
the configuring the time domain polling granularity or the frequency domain polling granularity includes: if multiple simulated load templates are set, separately setting the time domain polling granularity or the frequency domain polling granularity of the simulated load templates to a specific value or a preset value range, where a preset value range of the time domain polling granularity is from 1 ms to infinity, and a preset value range of the frequency domain polling granularity is 1-100 RB.

With reference to the first aspect or the first or the second possible implementation manner of the first aspect, in a third possible implementation manner, the generating a simulated interference by using the interference characteristic parameter configured on the one or more simulated load templates includes:
based on different transmission modes and according to a Rank and/or a PMI and/or an MCS configured at a Media Access Control MAC layer or a Radio Resource Control RRC layer, generating a simulated interference; and performing polling between the multiple simulated load templates according to the configured time domain polling granularity or the configured frequency domain polling granularity.

With reference to the first aspect or the first or the second possible implementation manner of the first aspect, in a fourth possible implementation manner, the method further includes:
copying the interference characteristic parameters of the one or more simulated load templates to one or more simulated user equipments, and loading simulated load to the interference cell by using the one or more simulated user equipments.

With reference to the first aspect or the first or the second possible implementation manner of the first aspect, in a fifth possible implementation manner, the method further includes:
based on a manner in which an inter-cell interference coordination ICIC function is enabled for an interference cell, copying the interference characteristic parameters of the one or more simulated load templates to one or more simulated user equipments, and loading simulated load to a center frequency band and an edge frequency band by using the one or more simulated user equipments.

With reference to the first aspect or the first or the second possible implementation manner of the first aspect, in a sixth possible implementation manner, the method further includes:
if a Radio Resource Control RRC layer only configures some of the interference characteristic parameters, for an interference characteristic parameter that is not configured, performing simulated scrambling according to a default value or in a default manner; or
if the RRC layer only configures some of the interference characteristic parameters and the configured interference characteristic parameters are configured as a preset value range, performing simulated scrambling in a manner of performing random selection or polling selection within the preset value range.

According to a second aspect of the present invention, an apparatus for generating a simulated interference is provided, and the apparatus includes:
a parameter configuring module, configured to separately configure interference characteristic parameters on one or more set simulated load templates, where one simulated load template is used to simulate one interference or a type of interference that has a same interference characteristic; and
a simulated interference generating module, configured to generate a simulated interference by using the interference characteristic parameters configured on the one or more simulated load templates, where if multiple simulated load templates are set, polling is performed, in a time domain and/or a frequency domain, on interferences generated by the multiple simulated load templates by means of simulation.

In a first possible implementation manner of the second aspect, the interference characteristic parameters include a transmission mode, a resource utilization rate, a Rank, a precoding matrix indicator PMI, a modulation and coding scheme MCS, and a time domain polling granularity or a frequency domain polling granularity of the one or more simulated load templates.

With reference to the first possible implementation manner of the second aspect, in a second possible implementation manner,
the parameter configuring module is specifically configured to configure the transmission mode of the one or more simulated load templates, configure the resource utilization rate of the one or more simulated load templates, configure the Rank and the PMI of the one or more simulated load templates, configure the MCS of the one or more simulated load templates, and configure the time domain polling granularity or the frequency domain polling granularity, where the configuring the transmission mode of the one or more simulated load templates includes: configuring the transmission mode or a transmission scheme, and accepting or not accepting a restriction of a characteristic license of an interference cell; the configuring the resource utilization rate of the one or more simulated load templates includes: configuring a resource block RB utilization rate and a transmit power utilization rate of the interference cell, where if an RB utilization rate or a transmit power utilization rate that is scheduled by the interference cell and is of a real user equipment UE is lower than a preset threshold, simulated load is scheduled, or if an RB utilization rate or a transmit power utilization rate that is scheduled by the interference cell and is of a real UE is higher than a preset threshold, simulated load is invalid; the configuring the Rank and the PMI of the one or more simulated load templates includes: according to the configured transmission mode, setting each of a Rank and a PMI that are corresponding to the transmission mode to a specific value or a preset value range; the configuring the MCS of the one or more simulated load templates includes: setting the MCS of the one or more simulated load templates to a specific value or a preset value range; and the configuring the time domain polling granularity or the frequency domain polling granularity includes: if multiple simulated load templates are set, separately setting the time domain polling granularity or the frequency domain polling granularity of the simulated load templates to a specific value or a preset value range, where a preset value range of the time domain polling granularity is from 1 ms to infinity, and a preset value range of the frequency domain polling granularity is 1-100 RB.

With reference to the second aspect or the first or the second possible implementation manner of the second aspect, in a third possible implementation manner, the simulated interference generating module is specifically configured to, based on different transmission modes and according to a Rank and/or a PMI and/or an MCS configured at a Media Access Control MAC layer or a Radio Resource Control RRC layer, generate a simulated interference; and perform polling between the multiple simulated load templates according to the configured time domain polling granularity or the configured frequency domain polling granularity.

With reference to the second aspect or the first or the second possible implementation manner of the second aspect, in a fourth possible implementation manner, the apparatus further includes a parameter copying module, where the parameter copying module is configured to copy the interference characteristic parameters of the one or more simulated load templates to one or more simulated user equipments, and load simulated load to the interference cell by using the one or more simulated user equipments.

With reference to the second aspect or the first or the second possible implementation manner of the second aspect, in a fifth possible implementation manner, the apparatus further includes a parameter copying module, where the parameter copying module is configured to, based on a manner in which an ICIC function is enabled for an interference cell, copy the interference characteristic parameters of the one or more simulated load templates to one or more simulated user equipments, and load simulated load to a center frequency band and an edge frequency band by using the one or more simulated user equipments.

With reference to the second aspect or the first or the second possible implementation manner of the second aspect, in a sixth possible implementation manner, the simulated interference generating module is further configured to: if the Radio Resource Control RRC layer only configures some of the interference characteristic parameters, for an interference characteristic parameter that is not configured, perform simulated scrambling according to a default value or in a default manner; or if the RRC layer only configures some of the interference characteristic parameters and the configured interference characteristic parameters are configured as a preset value range, perform simulated scrambling in a manner of performing random selection or polling selection within the preset value range.

It can be learned from the foregoing technical solutions that, the method and apparatus for generating a simulated interference provided in the embodiments of the present invention have the following advantages: Interference characteristic parameters may be configured for each interference source or each type of interference source, and a simulated interference may be generated according to the configured interference characteristic parameters. Therefore, an interference effect consistent with that of a real user equipment may be achieved, thereby more objectively reflecting system performance in different scenarios, saving a test investment and cost, and improving test efficiency.

### BRIEF DESCRIPTION OF DRAWINGS

To describe the technical solutions in the embodiments of the present invention more clearly, the following briefly introduces the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1 is a schematic flowchart of a method for generating a simulated interference according to an embodiment of the present invention;
FIG. 2 is another schematic flowchart of a method for generating a simulated interference according to an embodiment of the present invention;
FIG. 3 is a schematic structural diagram of an apparatus for generating a simulated interference according to an embodiment of the present invention; and
FIG. 4 is another schematic structural diagram of an apparatus for generating a simulated interference according to an embodiment of the present invention.

### DESCRIPTION OF EMBODIMENTS

Embodiments of the present invention provide a method and an apparatus for generating a simulated interference, which are used to obtain a simulated interference of which an interference characteristic is consistent with an interference characteristic of a real user equipment, thereby more objectively reflecting system performance in different scenarios, enhancing a technical evaluation effect, and improving technical evaluation efficiency.

The following clearly describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

The following separately provides detailed descriptions.

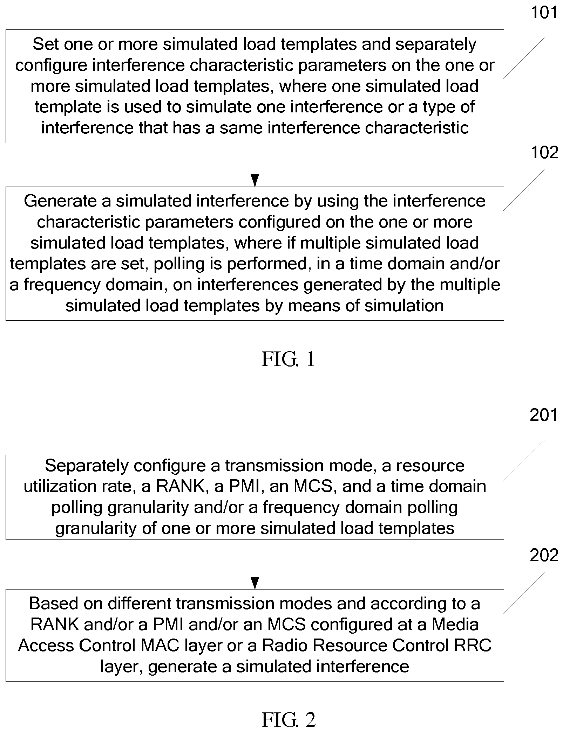

Referring to FIG. 1, FIG. 1 is a schematic flowchart of a method for generating a simulated interference according to an embodiment of the present invention, where the method includes:
Step 101: Set one or more simulated load templates and separately configure interference characteristic parameters on the one or more simulated load templates, where one simulated load template is used to simulate one interference or a type of interference that has a same interference characteristic.

That is, each of the one or more simulated load templates is corresponding to a type of interference user equipment, which may include one or more interference user equipments but has a same interference characteristic.

Step 102: Generate a simulated interference by using the interference characteristic parameters configured on the one or more simulated load templates, where if multiple simulated load templates are set, polling is performed, in a time domain and/or a frequency domain, on interferences generated by the multiple simulated load templates by means of simulation.

In this embodiment of the present invention, the interference characteristic parameters include a transmission mode, a resource utilization rate, a Rank, a precoding matrix indicator (PMI, Precoding Matrix Indicator), a modulation and coding scheme (MCS, Modulation and Coding Scheme), and a time domain polling granularity or a frequency domain polling granularity of the one or more simulated load templates. The configuring interference characteristic parameters on the one or more simulated load templates may include: separately configuring the transmission mode, the resource utilization rate, the Rank, the PMI, the MCS, and the time domain polling granularity or the frequency domain polling granularity of the one or more simulated load templates.

By using an application in a multiple input multiple output MIMO transmission mode as an example, the method for generating a simulated interference provided in this embodiment of the present invention is used to obtain a simulated interference of which an interference characteristic is consistent with an interference characteristic of a real user equipment. It may be understood that, the method is also applicable to single-input single-output (SISO, SISO Single Input Single Output), single-input multiple-output (SIMO, SIMO Single Input Multiple Output), and multiple-input single-output (MISO, MISO Multiple Input Single Output). Although there is only one transmit antenna in SIMO and SISO, and a corresponding transmission mode or transmission scheme cannot be configured, an interference may still be simulated more objectively by configuring parameters, such as a quantity of users and an MCS, which is not specifically limited herein.

It can be learned from the foregoing description that, according to the method for generating a simulated interference provided in this embodiment of the present invention, interference characteristic parameters may be configured for each interference source or each type of interference source, and a simulated interference may be generated according to the configured interference characteristic parameters. Therefore, an interference effect consistent with that of a real user equipment may be achieved, thereby more objectively reflecting system performance in different scenarios, saving a test investment and cost, and improving test efficiency.

Referring to FIG. 2, FIG. 2 is another schematic flowchart of a method for generating a simulated interference according to an embodiment of the present invention, where the method includes:
Step 201: Separately configure a transmission mode, a resource utilization rate, a Rank, a PMI, an MCS, and a time domain polling granularity or a frequency domain polling granularity of one or more simulated load templates.

Preferably, the configuring the transmission mode of the one or more simulated load templates includes:
configuring the transmission mode or a transmission scheme, and accepting or not accepting a restriction of a characteristic license of an interference cell. The configured transmission mode only affects data transmission through a physical downlink shared channel (PDSCH, Physical Downlink Shared Channel), but does not affect pilot transmission of a cell-specific reference signal (CRS, Cell-specific Reference Signal) or values of parameters, such as pilot transmit power, Pa, and Pb, so that simulated load and inter-cell interference coordination (ICIC, Inter-Cell Interference Coordination) may co-exist.

The characteristic license of the interference cell may include MIMO or BF (beam forming, beam forming), and may further include another characteristic, such as an active antenna system (AAS, Active Antenna System), frequency-selective scheduling, ICIC, or a power class.

Preferably, the configuring the resource utilization rate of the one or more simulated load templates includes:
configuring a resource block (RB, Resource Block) utilization rate and a transmit power utilization rate of an interference cell, where if an RB utilization rate or a transmit power utilization rate that is scheduled by the interference cell and is of a real user equipment (UE, User Equipment) is lower than a preset threshold, simulated load is scheduled; or if an RB utilization rate or a transmit power utilization rate that is scheduled by the interference cell and is of a real UE is higher than a preset threshold, simulated load is invalid.

That is, the resource utilization rate includes the RB utilization rate and the transmit power utilization rate of the interference cell, and an RB utilization rate threshold or a transmit power utilization rate threshold is preset.

Preferably, the configuring the MCS of the one or more simulated load templates includes:
setting the MCS of the one or more simulated load templates to a specific value or a preset value range, that is, a subset from 0 to 28.

Preferably, the configuring the time domain polling granularity or the frequency domain polling granularity includes:
if multiple simulated load templates are set, separately setting the time domain polling granularity or the frequency domain polling granularity of the simulated load templates to a specific value or a preset value range, where a preset value range of the time domain polling granularity is from 1 ms to infinity, and a preset value range of the frequency domain polling granularity is 1-100 RB.

Preferably, the configuring the Rank and the PMI of the one or more simulated load templates includes:
according to the configured transmission mode, setting each of a Rank and a PMI that are corresponding to the transmission mode to a specific value or a preset value range. For a specific value range, refer to Table 1. Table 1 lists value ranges of valid Ranks or PMIs in different transmission modes.

**Table 1**

| **Transmission Mode** | **Rank** | **PMI** |
|---|---|---|
| TM1 | 1 | N.A. |
| TM2 | 1 | N.A. |
| TM3 | 1-4 | N.A. |
| TM4 | 1-4 | 0-15 |
| TM5 | 1 | 0-15 |
| TM6 | 1 | 0-15 |
| TM7 | 1 | N.A. |
| TM8 | 1-2 | 0-15 |
| TM9 | 1-8 | PMI1: 0-15 |
| | | PMI2: 0-15 |

It should be noted that, with reference to Table 1 and according to the configured interference characteristic parameters, the following briefly describes a form of generating a simulated interference in each transmission mode defined by an LTE specification.

Based on transmission modes TM1, TM2, and TM3, the PMI is marked as N.A, and N.A indicates that configuration is not required or configuration is invalid. No matter whether and how a Radio Resource Control (RRC, Radio Resource Control) layer (L3 for short) configures the PMI, a physical layer (L1 for short) and a Media Access Control (MAC, Media Access Control) layer (L2 for short) generate a precoding matrix and a physical downlink shared channel PDSCH signal according to the LTE specification 36.211. It may be understood that L1, L2, and L3 belong to framework content of an eNodeB, and are not specifically explained herein.

Based on transmission mode TM7, the PMI is marked as N.A, that is, it indicates that no matter how L3 configures the PMI, L2 and L1 generate a beam forming matrix and a PDSCH signal according to a used beam forming technology.

Based on transmission mode TM8 or TM9, the PMI may be configured or may not be configured. If the PMI is configured, a precoding matrix and a PDSCH signal are generated according to a codebook defined by the specification 36.211 and the specification 36.213. If the PMI is not configured, a beam forming matrix and a PDSCH signal are generated according to a used beam forming technology.

It may be understood that, in this embodiment of the present invention, the configuring a simulated interference may further include: configuring a frequency-selective scheduling function of simulated load and configuring a quantity of simulated load templates, where the frequency-selective scheduling function of simulated load indicates whether simulated load uses frequency-selective scheduling. If the function is enabled, frequency-selective scheduling is used; if the function is disabled, non-frequency-selective scheduling is used. The quantity of simulated load templates indicates the quantity K of templates of the simulated load. A transmission mode or a transmission scheme, and a scheduled Rank, PMI, and MCS may be independently configured for each template. If the quantity of simulated load templates is zero, a simulated interference is generated according to a default transmission scheme or a Rank or an MCS.

Step 202: Based on different transmission modes and according to a Rank and/or a PMI and/or an MCS configured at a Media Access Control MAC layer or a Radio Resource Control RRC layer, generate a simulated interference.

Specifically, L2 or L3 generates a simulated interference according to the configured interference characteristic parameters (the Rank and/or the PMI and/or the MCS). In a time domain, an interference of each of the one or more simulated load templates occupies SimuLoadTimePeriod successive transmission time intervals (TTI, Transmission Time Interval), but does not include an orthogonal frequency division multiplexing (OFDM, Orthogonal Frequency Division Multiplexing) symbol in which a physical downlink control channel (PDCCH, Physical Downlink Control Channel) is located. In a case that multiple simulated load templates are set, polling is further performed between the multiple simulated load templates according to the configured time domain polling granularity or the configured frequency domain polling granularity. That is, polling is performed, in a time domain and/or a frequency domain, on interferences generated by the multiple simulated load templates by means of simulation. The parameter SimuLoadTimePeriod may be configured according to an actual situation.

Reference may be made to Table 1. First, the Rank of the one or more simulated load templates is configured as accepting or not accepting license control of MIMO and BF, and not accepting a codebook subset restriction. It is set that 1T-4T represent a quantity of antenna ports of an eNodeB. For transmission modes TM1, TM2, and TM3, a PMI that is input by L3 is meaningless (that is, configuration of the PMI is not required or configuration is invalid), and L2 generates a precoding matrix according to the specification 36.211. In a 2T closed-loop mode (including transmission mode TM4, TM5, or TM6), a PMI scheduled by L2 performs upper and lower limiting processing according to the Rank and the PMI that is input by L3, to ensure that a PMI of Rank1 is 0-3, and a PMI of Rank2 is 1-2, where Rank1 and Rank2 represent a quantity of spatial independent data streams. For 1T, L2 performs simulated scrambling according to transmission mode TM1 and the configured MCS. For 2T or 4T, if the transmission mode is TM1, simulated scrambling is performed according to TM2 and the configured MCS. For TM7, the PMI that is input by L3 is meaningless, and L2 and L1 generate a beam forming matrix according to a used beam forming technology. For TM8 or TM9, if L3 configures the PMI, a precoding matrix is generated according to the codebook defined by the specification 36.211 and the specification 36.213. If the PMI is not configured, a beam forming matrix is generated according to a used beam forming technology.

Further preferably, the method for generating a simulated interference may further include:
copying the interference characteristic parameters of the one or more simulated load templates to one or more simulated user equipments, and loading simulated load to the interference cell by using the one or more simulated user equipments.

Within a TTI, according to a resource allocation type (the LTE specification 36.213 defines three resource allocation types 0, 1, and 2), RB resources are allocated to each simulated load user, so that an RB that can be addressed by a simulated user equipment may not reach a set simulated load level. Therefore, the interference characteristic parameters configured on each of the one or more simulated load templates (equivalent to a simulated load user equipment) need to be copied to one or more simulated user equipments (for example, a maximum of eight user equipments), and reaching a set resource utilization rate of the simulated load is implemented by performing scrambling on these simulated user equipments.

Further, the method for generating a simulated interference may further include:
based on a manner in which an ICIC function is enabled for an interference cell, copying the interference characteristic parameters of the one or more simulated load templates to one or more simulated user equipments, and loading simulated load to a center frequency band and an edge frequency band by using the one or more simulated user equipments.

If the interference cell enables the ICIC function, a center user and an edge user of the interference cell have different configuration of power control parameters (Pa and Pb). In this case, the parameters configured on each of the one or more simulated load templates are still copied to one or more simulated user equipments (for example, a maximum of 16 user equipments), and reaching the set resource utilization rate of the simulated load is separately implemented in the center frequency band and the edge frequency band by performing scrambling on these simulated user equipments.

Preferably, the method for generating a simulated interference may further include: if the Radio Resource Control RRC layer only configures some of the interference characteristic parameters, for an interference characteristic parameter that is not configured, performing simulated scrambling according to a default value or in a default manner; or
if the RRC layer only configures some of the interference characteristic parameters and the configured interference characteristic parameters are configured as a preset value range, performing simulated scrambling in a manner of performing random selection or polling selection within the preset value range.

For example, if the Rank is not configured, simulated scrambling may be performed according to a default Rank1. If the MCS is not configured, simulated scrambling may be performed according to a default MCS; or simulated scrambling may be performed by randomly selecting an MCS; or simulated scrambling may be performed in a manner of performing MCS polling within a range.

It may be understood that, in combination with the interference characteristic parameters configured by L3, such as the transmission mode, the Rank, the PMI, and the MCS, and with reference to the specification 36.211, pseudo random noise or a specific source signal may be used in this embodiment of the present invention, to generate a PDSCH signal in a processing procedure of a downlink physical channel, and the PDSCH signal is mapped to an antenna of the eNodeB for transmitting.

It should be noted that, the method for generating a simulated interference may be performed by the eNodeB, and a simulated interference is generated on an eNodeB side according to the configured interference characteristic parameters. An independent apparatus (such as a signal generator) may also be used to generate a simulated interference.

It can be learned from the foregoing description that, according to a method for generating a simulated interference provided in this embodiment of the present invention, first, interference characteristic parameters are independently configured for each interference source or each type of interference source, where the configured interference characteristic parameters include a quantity of interference sources, and a transmission mode, a PMI, a Rank, an MCS, transmit power, and a time domain polling granularity or a frequency domain polling granularity of each interference source. Then, simulated interference data is generated according to the configured interference characteristic parameters and is sent over an air interface. A simulated interference of which an interference characteristic is consistent with an interference characteristic of a real user equipment may be obtained, thereby more objectively reflecting system performance in different scenarios, saving a test investment and cost, and improving test efficiency. In the technical solutions of the present invention, an interference effect generated by a simulated interference is equivalent to an interference effect generated by using a real UE, thereby better evaluating or demonstrating performance of a specific technology (such as MIMO or AAS) in a multi-cell scenario. Compared with an interference of a real UE, a simulated interference is relatively flexible, and substantially saves materials and a labor cost.

The following describes another method for generating a simulated interference in an embodiment of the present invention. In this embodiment, the method for generating a simulated interference specifically includes the following steps:
S1. Configure interference characteristic parameters.

In this embodiment, the interference characteristic parameters are used to simulate one interference or a type of interference that has a same interference characteristic, and the interference characteristic parameters include a transmission mode, a Rank, and a PMI.

S2. Generate a simulated interference by using the interference characteristic parameters.

After the interference characteristic parameters are configured, a simulated interference may be generated by using these interference characteristic parameters.

For ease of understanding, the following describes this embodiment in detail.

In this embodiment, the interference characteristic parameters may include at least the transmission mode, the Rank, and the PMI, and a configuring process is specifically as follows:
Configuring the transmission mode includes: configuring the transmission mode or a transmission scheme, and accepting or not accepting a restriction of a characteristic license of an interference cell; and
   configuring the Rank and the PMI includes: according to the configured transmission mode, setting each of a Rank and a PMI that are corresponding to the transmission mode to a specific value or a preset value range.

It may be understood that, in an actual application, in addition to the transmission mode, the Rank, and the PMI, the interference characteristic parameters may further include other parameters, such as a resource utilization rate and an MCS. In this embodiment, a process of configuring the resource utilization rate and the MCS is specifically as follows:
Configuring the resource utilization rate includes: configuring a resource block RB utilization rate and a transmit power utilization rate of an interference cell, where if an RB utilization rate or a transmit power utilization rate that is scheduled by the interference cell and is of a real user equipment UE is lower than a preset threshold, simulated load is scheduled; or if an RB utilization rate or a transmit power utilization rate that is scheduled by the interference cell and is of a real UE is higher than a preset threshold, simulated load is invalid; and
   configuring the MCS includes: setting the MCS to a specific value or a preset value range.

It may be understood that, in an actual application, in addition to the transmission mode, the Rank, and the PMI, the interference characteristic parameters may further include other parameters. For example, when multiple groups of interference characteristic parameters exist, the interference characteristic parameters may further include a time domain polling granularity and/or a frequency domain polling granularity. A process of configuring the time domain polling granularity and/or the frequency domain polling granularity is specifically:
separately setting a time domain polling granularity and/or a frequency domain polling granularity of each of the multiple groups of interference characteristic parameters to a specific value or a preset value range, where a preset value range of the time domain polling granularity is from 1 ms to infinity, and a preset value range of the frequency domain polling granularity is 1-100 RB.

In this embodiment, an apparatus for generating a simulated interference may generate the simulated interference based on different transmission modes and according to a Rank and/or a PMI configured at an RRC layer.

When multiple groups of interference characteristic parameters exist, the apparatus for generating a simulated interference may generate the simulated interference based on different transmission modes and according to a Rank and/or a PMI configured at an RRC layer; and perform polling between the multiple groups of interference characteristic parameters according to the configured time domain polling granularity and/or the configured frequency domain polling granularity, so that polling is performed, in a time domain or a frequency domain, on simulated interferences generated by the multiple groups of interference characteristic parameters.

It should be noted that, if an RB that can be addressed by a simulated user equipment cannot reach a set simulated load level, the interference characteristic parameters may be further copied to one or more simulated user equipments, and simulated load is loaded to the interference cell by using these simulated user equipments.

In addition, if an ICIC function is enabled for an interference cell, the apparatus for generating a simulated interference may copy the interference characteristic parameters to one or more simulated user equipments, and load simulated load to a center frequency band and an edge frequency band by using these simulated user equipments.

To better implement the method for generating a simulated interference provided in the embodiments of the present invention, the embodiments of the present invention further provide an apparatus based on the foregoing methods for generating a simulated interference. Meanings of nouns are the same as those in the foregoing method. For specific implementation details, refer to descriptions in the method embodiments.

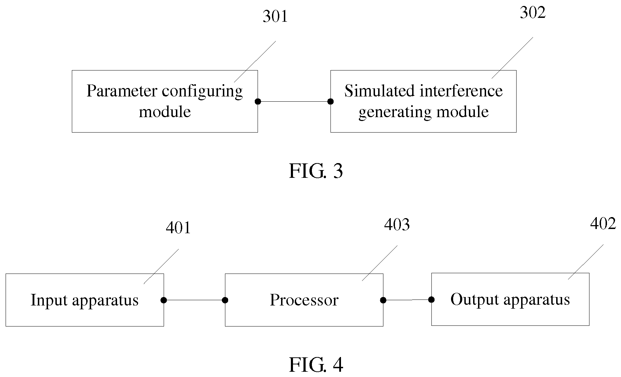

Referring to FIG. 3, FIG. 3 is a schematic structural diagram of an apparatus for generating a simulated interference according to an embodiment of the present invention, where the apparatus is applied to the methods for generating a simulated interference in the foregoing embodiments, and the apparatus includes:
a parameter configuring module 301, configured to separately configure interference characteristic parameters on one or more set simulated load templates, where one simulated load template is used to simulate one interference or a type of interference that has a same interference characteristic;
that is, each of the one or more simulated load templates is corresponding to a type of interference user equipment, which may include one or more interference user equipments but has a same interference characteristic; and
a simulated interference generating module 302, configured to generate a simulated interference by using the interference characteristic parameters configured on the one or more simulated load templates, where if multiple simulated load templates are set, polling is performed, in a time domain and/or a frequency domain, on interferences generated by the multiple simulated load templates by means of simulation.

In this embodiment of the present invention, the interference characteristic parameters include a transmission mode, a resource utilization rate, a Rank, a precoding matrix indicator PMI, and a modulation and coding scheme MCS, and a time domain polling granularity or a frequency domain polling granularity of the one or more simulated load templates. The parameter configuring module 301 is configured to separately configure the transmission mode, the resource utilization rate, the Rank, the PMI, the MCS, and the time domain polling granularity or the frequency domain polling granularity of the one or more simulated load templates.

The apparatus for generating a simulated interference provided in this embodiment of the present invention may be applied to a transmission mode of multiple-input multiple-output MIMO, and is used to obtain a simulated interference of which an interference characteristic is consistent with an interference characteristic of a real user equipment. It may be understood that, the apparatus may also be applied to single-input single-output (SISO), single-input multiple-output (SIMO), and multiple-input single-output (MISO), which is not specifically limited herein.

It can be learned from the foregoing description that, according to the apparatus for generating a simulated interference provided in this embodiment of the present invention, interference characteristic parameters may be configured for each interference source or each type of interference source, and a simulated interference may be generated according to the configured interference characteristic parameters. Therefore, an interference effect consistent with that of a real user equipment may be achieved, thereby more objectively reflecting system performance in different scenarios, saving a test investment and cost, and improving test efficiency.

Preferably, in this embodiment of the present invention, the parameter configuring module 301 is specifically configured to configure the transmission mode of the one or more simulated load templates, configure the resource utilization rate of the one or more simulated load templates, configure the Rank and the PMI of the one or more simulated load templates, configure the MCS of the one or more simulated load templates, and configure the time domain polling granularity and/or the frequency domain polling granularity.

The configuring the transmission mode of the one or more simulated load templates includes: configuring the transmission mode or a transmission scheme, and accepting or not accepting a restriction of a characteristic license of an interference cell.

The configured transmission mode only affects data transmission through a physical downlink shared channel PDSCH, but does not affect pilot transmission of a cell-specific reference signal CRS or values of parameters, such as pilot transmit power, Pa, and Pb, so that simulated load and inter-cell interference coordination ICIC may co-exist. The characteristic license of the interference cell may include MIMO or BF, and may further include another characteristic, such as an active antenna system AAS, frequency-selective scheduling, ICIC, or a power class.

The configuring the resource utilization rate of the one or more simulated load templates includes: configuring a resource block RB utilization rate and a transmit power utilization rate of the interference cell, where if an RB utilization rate or a transmit power utilization rate that is scheduled by the interference cell and is of a real user equipment UE is lower than a preset threshold, simulated load is scheduled; or if an RB utilization rate or a transmit power utilization rate that is scheduled by the interference cell and is of a real UE is higher than a preset threshold, simulated load is invalid.

The configuring the Rank and the PMI of the one or more simulated load templates includes: according to the configured transmission mode, setting each of a Rank and a PMI that are corresponding to the transmission mode to a specific value or a preset value range. For a specific value range, refer to Table 1 in the foregoing embodiment.

The configuring the MCS of the one or more simulated load templates includes: setting the MCS of the one or more simulated load templates to a specific value or a preset value range, that is, a subset from 0 to 28.

The configuring the time domain polling granularity or the frequency domain polling granularity includes: if multiple simulated load templates are set, separately setting the time domain polling granularity or the frequency domain polling granularity of the simulated load templates to a specific value or a preset value range, where a preset value range of the time domain polling granularity is from 1 ms to infinity, and a preset value range of the frequency domain polling granularity is 1-100 RB.

In this implementation manner, the simulated interference generating module 302 is specifically configured to: based on different transmission modes and according to a Rank and/or a PMI and/or an MCS configured at a Media Access Control MAC layer or a Radio Resource Control RRC layer, generate a simulated interference; and in a case in which multiple simulated load templates are set, further perform polling between the multiple simulated load templates according to the configured time domain polling granularity or the configured frequency domain polling granularity.

It may be understood that, with reference to Table 1 and according to the configured interference characteristic parameters, a form of generating a simulated interference in each transmission mode defined by an LTE specification may be as follows:
Based on transmission modes TM1, TM2, and TM3, the PMI is marked as N.A, and N.A indicates that configuration is not required or configuration is invalid. No matter whether and how a Radio Resource Control RRC layer (L3 for short) configures the PMI, a physical layer (L1 for short) and a Media Access Control MAC layer (L2 for short) generate a precoding matrix and a physical downlink shared channel PDSCH signal according to the specification 36.211. It may be understood that L1, L2, and L3 belong to framework content of an eNodeB, and are not specifically explained herein.

Based on transmission mode TM7, the PMI is marked as N.A, that is, it indicates that no matter how L3 configures the PMI, L2 and L1 generate a beam forming matrix and a PDSCH signal according to a used beam forming technology.

Based on transmission mode TM8 or TM9, the PMI may be configured or may not be configured. If the PMI is configured, a precoding matrix and a PDSCH signal are generated according to a codebook defined by the specification 36.211 and the specification 36.213. If the PMI is not configured, a beam forming matrix and a PDSCH signal are generated according to a used beam forming technology.

In this implementation manner, a process during which the simulated interference generating module 302 is configured to generate a simulated interference may be specifically as follows:
Reference may be made to Table 1. First, the Rank of the one or more simulated load templates is configured as accepting or not accepting license control of MIMO and BF, and not accepting a codebook subset restriction. It is set that 1T-4T represent a quantity of antenna ports of an eNodeB. For transmission modes TM1, TM2, and TM3, a PMI that is input by L3 is meaningless (that is, configuration of the PMI is not required or configuration is invalid), and L2 generates a precoding matrix according to the specification 36.211. In a 2T closed-loop mode (including transmission mode TM4, TM5, or TM6), a PMI scheduled by L2 performs upper and lower limiting processing according to the Rank and the PMI that is input by L3, to ensure that a PMI of Rank1 is 0-3, and a PMI of Rank2 is 1-2, where Rank1 and Rank2 represent a quantity of spatial independent data streams. For 1T, L2 performs simulated scrambling according to transmission mode TM1 and the configured MCS. For 2T or 4T, if the transmission mode is TM1, simulated scrambling is performed according to TM2 and the configured MCS. For TM7, the PMI that is input by L3 is meaningless, and L2 and L1 generate a beam forming matrix according to a used beam forming technology. For TM8 or TM9, if L3 configures the PMI, a precoding matrix is generated according to the codebook defined by the specification 36.211 and the specification 36.213. If the PMI is not configured, a beam forming matrix is generated according to a used beam forming technology.

Further preferably, the apparatus may further include a parameter copying module, where the parameter copying module is configured to copy the interference characteristic parameters of the one or more simulated load templates to one or more simulated user equipments, and load simulated load to the interference cell by using the one or more simulated user equipments.

Within a TTI, according to a resource allocation type (the LTE specification 36.213 defines three resource allocation types 0, 1, and 2), RB resources are allocated to each simulated load user, so that an RB that can be addressed by a simulated user equipment may not reach a set simulated load level. Therefore, the interference characteristic parameters configured on each of the one or more simulated load templates (equivalent to a simulated load user equipment) need to be copied to one or more simulated user equipments (for example, a maximum of eight user equipments), and reaching a set resource utilization rate of the simulated load is implemented by performing scrambling on these simulated user equipments.

Further, based on a manner in which an ICIC function is enabled for an interference cell, the parameter copying module may be further configured to copy the interference characteristic parameters of the one or more simulated load templates to one or more simulated user equipments, and load simulated load to a center frequency band and an edge frequency band by using the one or more simulated user equipments.

If the interference cell enables the ICIC function, a center user and an edge user of the interference cell have different configuration of power control parameters (Pa and Pb). In this case, the parameters configured on each of the one or more simulated load templates are still copied to one or more simulated user equipments (for example, a maximum of 16 user equipments), and reaching the set resource utilization rate of the simulated load is separately implemented in the center frequency band and the edge frequency band by performing scrambling on these simulated user equipments.

Preferably, the simulated interference generating module 302 is further configured to: if the Radio Resource Control RRC layer only configures some of the interference characteristic parameters, for an interference characteristic parameter that is not configured, perform simulated scrambling according to a default value or in a default manner; or if the RRC layer only configures some of the interference characteristic parameters and the configured interference characteristic parameters are configured as a preset value range, perform simulated scrambling in a manner of performing random selection or polling selection within the preset value range. For example, if the Rank is not configured, simulated scrambling may be performed according to a default Rank1. If the MCS is not configured, simulated scrambling may be performed according to a default MCS; or simulated scrambling may be performed by randomly selecting an MCS; or simulated scrambling may be performed in a manner of performing MCS polling within a range.

It may be understood that, in combination with the interference characteristic parameters configured by L3, such as the transmission mode, the Rank, the PMI, and the MCS, and with reference to the specification 36.211, pseudo random noise or a specific source signal may be used in this embodiment of the present invention, to generate a PDSCH signal in a processing procedure of a downlink physical channel, and the PDSCH signal is mapped to an antenna of the eNodeB for transmitting.

It should be noted that, the apparatus for generating a simulated interference may be an eNodeB, that is, a simulated interference is generated on an eNodeB side according to the configured interference characteristic parameters. An independent apparatus (such as a signal generator) may also be used to generate a simulated interference.

It may be clearly understood by a person skilled in the art that, for convenience and brevity of description, for a detailed working process of the foregoing apparatus for generating a simulated interference, and those of modules in the apparatus, refer to a corresponding process in the foregoing method embodiments for generating a simulated interference, and details are not described herein again.

It can be learned from the foregoing description that, according to the apparatus for generating a simulated interference provided in this embodiment of the present invention, first, interference characteristic parameters are independently configured for each interference source or each type of interference source, where the configured interference characteristic parameters include a quantity of interference sources, and a transmission mode, a PMI, a Rank, an MCS, transmit power, and a time domain polling granularity or a frequency domain polling granularity of each interference source. Then, simulated interference data is generated according to the configured interference characteristic parameters and is sent over an air interface. A simulated interference of which an interference characteristic is consistent with an interference characteristic of a real user equipment may be obtained, thereby more objectively reflecting system performance in different scenarios, saving a test investment and cost, and improving test efficiency. In the technical solutions of the present invention, an interference effect generated by a simulated interference is equivalent to an interference effect generated by using a real UE, thereby better evaluating or demonstrating performance of a specific technology (such as MIMO or AAS) in a multi-cell scenario. Compared with an interference of a real UE, a simulated interference is relatively flexible, and substantially saves materials and a labor cost. Referring to FIG. 4, FIG. 4 is another schematic structural diagram of an apparatus for generating a simulated interference according to an embodiment of the present invention, where the apparatus for generating a simulated interference includes an input apparatus 401, an output apparatus 402, and a processor 403, and the processor 403 performs the following steps:
setting one or more simulated load templates and separately configuring interference characteristic parameters on the one or more simulated load templates, where one simulated load template is used to simulate one interference or a type of interference that has a same interference characteristic; and
generating a simulated interference by using the interference characteristic parameters configured on the one or more simulated load templates, where if multiple simulated load templates are set, polling is performed, in a time domain and/or a frequency domain, on interferences generated by the multiple simulated load templates by means of simulation.

The interference characteristic parameters include a transmission mode, a resource utilization rate, a Rank, a precoding matrix indicator PMI, and a modulation and coding scheme MCS, and a time domain polling granularity or a frequency domain polling granularity of the one or more simulated load templates. The configuring interference characteristic parameters on the one or more simulated load templates by the processor 403 includes: separately configuring the transmission mode, the resource utilization rate, the Rank, the PMI, the MCS, and the time domain polling granularity or the frequency domain polling granularity of the one or more simulated load templates.

Further, the configuring the transmission mode of the one or more simulated load templates includes: configuring the transmission mode or a transmission scheme, and accepting or not accepting a restriction of a characteristic license of an interference cell; the configuring the resource utilization rate of the one or more simulated load templates includes: configuring a resource block RB utilization rate and a transmit power utilization rate of the interference cell, where if an RB utilization rate or a transmit power utilization rate that is scheduled by the interference cell and is of a real user equipment UE is lower than a preset threshold, simulated load is scheduled, or if an RB utilization rate or a transmit power utilization rate that is scheduled by the interference cell and is of a real UE is higher than a preset threshold, simulated load is invalid; the configuring the Rank and the PMI of the one or more simulated load templates includes: according to the configured transmission mode, setting each of a Rank and a PMI that are corresponding to the transmission mode to a specific value or a preset value range; the configuring the MCS of the one or more simulated load templates includes: setting the MCS of the one or more simulated load templates to a specific value or a preset value range; and the configuring the time domain polling granularity or the frequency domain polling granularity includes: if multiple simulated load templates are set, separately setting the time domain polling granularity or the frequency domain polling granularity of the simulated load templates to a specific value or a preset value range, where a preset value range of the time domain polling granularity is from 1 ms to infinity, and a preset value range of the frequency domain polling granularity is 1-100 RB.

Further, the generating, by the processor 403, a simulated interference by using the interference characteristic parameters includes: based on different transmission modes and according to a Rank and/or a PMI and/or an MCS configured at a Media Access Control MAC layer or a Radio Resource Control RRC layer, generating a simulated interference; and performing polling between the multiple simulated load templates according to the configured time domain polling granularity or the configured frequency domain polling granularity.

Preferably, the processor 403 may be further configured to copy the interference characteristic parameters of the one or more simulated load templates to one or more simulated user equipments, and load simulated load to the interference cell by using the one or more simulated user equipments.

Preferably, the processor 403 may be further configured to: based on a manner in which an ICIC function is enabled for an interference cell, copy the interference characteristic parameters of the one or more simulated load templates to one or more simulated user equipments, and load simulated load to a center frequency band and an edge frequency band by using the one or more simulated user equipments.

Further preferably, the processor 403 may be further configured to:
if the Radio Resource Control RRC layer only configures some of the interference characteristic parameters, for an interference characteristic parameter that is not configured, perform simulated scrambling according to a default value or in a default manner; or
if the RRC layer only configures some of the interference characteristic parameters and the configured interference characteristic parameters are configured as a preset value range, perform simulated scrambling in a manner of performing random selection or polling selection within the preset value range.

It may be clearly understood by a person skilled in the art that, for convenience and brevity of description, for a detailed working process of the foregoing apparatus for generating a simulated interference, and that of the processor 403 in the apparatus, refer to a corresponding process in the foregoing method embodiments for generating a simulated interference, and details are not described herein again.

It can be learned from the foregoing description that, according to the apparatus for generating a simulated interference provided in this embodiment of the present invention, first, interference characteristic parameters are independently configured for each interference source or each type of interference source, where the configured interference characteristic parameters include a quantity of interference sources, and a transmission mode, a PMI, a Rank, an MCS, transmit power, and a time domain polling granularity or a frequency domain polling granularity of each interference source. Then, simulated interference data is generated according to the configured interference characteristic parameters and is sent over an air interface. A simulated interference of which an interference characteristic is consistent with an interference characteristic of a real user equipment may be obtained, thereby more objectively reflecting system performance in different scenarios, saving a test investment and cost, and improving test efficiency. In the technical solutions of the present invention, an interference effect generated by a simulated interference is equivalent to an interference effect generated by using a real UE, thereby better evaluating or demonstrating performance of a specific technology (such as MIMO or AAS) in a multi-cell scenario. Compared with an interference of a real UE, a simulated interference is relatively flexible, and substantially saves materials and a labor cost.

The following describes another apparatus for generating a simulated interference in an embodiment of the present invention. In this embodiment, the apparatus for generating a simulated interference includes:
a parameter configuring module, configured to configure interference characteristic parameters, where the interference characteristic parameters are used to simulate one interference or a type of interference that has a same interference characteristic, and the interference characteristic parameters include a transmission mode, a Rank, and a precoding matrix indicator PMI; and
a simulated interference generating module, configured to generate a simulated interference by using the interference characteristic parameters.

In this embodiment, the parameter configuring module is specifically configured to configure the transmission mode, the Rank, and the PMI.

The configuring the transmission mode by the parameter configuring module is specifically: configuring the transmission mode or a transmission scheme, and accepting or not accepting a restriction of a characteristic license of an interference cell; and
the configuring the Rank and the PMI by the parameter configuring module is specifically: according to the configured transmission mode, setting each of an Rank and a PMI that are corresponding to the transmission mode to a specific value or a preset value range.

It may be understood that, in an actual application, in addition to the transmission mode, the Rank, and the PMI, the interference characteristic parameters may further include other parameters, such as a resource utilization rate and an MCS. In this embodiment, configuring the resource utilization rate by the parameter configuring module is specifically: configuring a resource block RB utilization rate and a transmit power utilization rate of the interference cell, where if an RB utilization rate or a transmit power utilization rate that is scheduled by the interference cell and is of a real user equipment UE is lower than a preset threshold, simulated load is scheduled; or if an RB utilization rate or a transmit power utilization rate that is scheduled by the interference cell and is of a real UE is higher than a preset threshold, simulated load is invalid; and
configuring the MCS by the parameter configuring module is specifically: setting the MCS to a specific value or a preset value range.

It may be understood that, in an actual application, in addition to the transmission mode, the Rank, and the PMI, the interference characteristic parameters may further include other parameters. For example, when multiple groups of interference characteristic parameters exist, the interference characteristic parameters may further include a time domain polling granularity and/or a frequency domain polling granularity. In this embodiment, configuring the time domain polling granularity and/or the frequency domain polling granularity by the parameter configuring module is specifically: separately setting a time domain polling granularity and/or a frequency domain polling granularity of each of the multiple groups of interference characteristic parameters to a specific value or a preset value range, where a preset value range of the time domain polling granularity is from 1 ms to infinity, and a preset value range of the frequency domain polling granularity is 1-100 RB.

In this embodiment, the simulated interference generating module is specifically configured to generate the simulated interference based on different transmission modes and according to a Rank and/or a PMI configured at an RRC layer.

If multiple groups of interference characteristic parameters exist, the simulated interference generating module in this embodiment is specifically configured to generate a simulated interference based on different transmission modes and according to a Rank and/or a PMI configured at an RRC layer; and perform polling between the multiple groups of interference characteristic parameters according to the configured time domain polling granularity and/or the configured frequency domain polling granularity, so that polling is performed, in a time domain or a frequency domain, on simulated interferences generated by the multiple groups of interference characteristic parameters.

In this embodiment, the apparatus for generating a simulated interference may further include a parameter copying module, configured to copy the interference characteristic parameters to one or more simulated user equipments, and load simulated load to the interference cell by using the one or more simulated user equipments;
or
based on a manner in which an ICIC function is enabled for an interference cell, copy the interference characteristic parameters to one or more simulated user equipments, and load simulated load to a center frequency band and an edge frequency band by using the one or more simulated user equipments.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in the present application, it should be understood that the disclosed system, apparatus, and method may be implemented in other manners. For example, the described apparatus embodiment is merely exemplary. For example, the unit division is merely logical function division and may be other division in actual implementation. For example, a plurality of units or components may be combined or integrated into another system, or some characteristics may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of the present invention essentially, or the part contributing to the prior art, or all or some of the technical solutions may be implemented in the form of a software product. The software product is stored in a storage medium and includes several instructions for instructing a computer device (which may be a personal computer, a server, or a network device) to perform all or some of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The method and the apparatus for generating a simulated interference provided in the present invention have been described in detail in the foregoing, and an ordinary person skilled in the art can make variations to specific implementation manners and the application scope. In conclusion, the content of this specification shall not be understood as a limitation on the present invention.

## Claims

1. A method for generating a simulated interference, comprising:
separately configuring (201) interference characteristic parameters on one or more simulated load templates, wherein the interference characteristic parameters are used to simulate one interference source or a type of interference source that has a same interference characteristic, and the interference characteristic parameters comprise a transmission mode, a Rank, a precoding matrix indicator, PMI, a resource utilization rate and a modulation and coding scheme, MCS;
wherein the configuring interference characteristic parameters comprises:
configuring the transmission mode, the Rank, the PMI, the resource utilization rate and the MCS;
wherein the configuring the MCS comprises: setting the MCS to a specific value or a preset value range; and
generating (202) a simulated interference by using the interference characteristic parameters configured on the one or more simulated load templates;
**characterized in that**
the configuring the resource utilization rate comprises: configuring a resource block, RB, utilization rate and a transmit power utilization rate of an interference cell, wherein if an RB utilization rate or a transmit power utilization rate that is scheduled by the interference cell is lower than a preset threshold, simulated load is scheduled; or if an RB utilization rate or a transmit power utilization rate that is scheduled by the interference cell is higher than a preset threshold, simulated load is invalid.

2. The method according to claim 1, wherein:
the configuring the transmission mode comprises: configuring the transmission mode, and accepting or not accepting a restriction of MIMO, beam forming, an active antenna system, frequency selective scheduling, inter-cell interference coordination (ICIC) or a power class of an interference cell; and
the configuring the Rank and the PMI comprises: according to the configured transmission mode, setting each of a Rank and a PMI that are corresponding to the transmission mode to a specific value or a preset value range.

3. The method according to any one of claims 1 to 2, wherein if multiple groups of interference characteristic parameters exist, the interference characteristic parameters further comprise a time domain polling granularity and/or a frequency domain polling granularity; and
the configuring interference characteristic parameters further comprises:
configuring the time domain polling granularity and/or the frequency domain polling granularity.

4. The method according to claim 3, wherein the configuring the time domain polling granularity and/or the frequency domain polling granularity comprises:
separately setting a time domain polling granularity and/or a frequency domain polling granularity of each of the multiple groups of interference characteristic parameters to a specific value or a preset value range, wherein a preset value range of the time domain polling granularity is from 1 ms to infinity, and a preset value range of the frequency domain polling granularity is 1-100 RB.

5. An apparatus for generating a simulated interference, comprising:
a parameter configuring module (301), configured to separately configure interference characteristic parameters on one or more simulated load templates, wherein the interference characteristic parameters are used to simulate one interference source or a type of interference source that has a same interference characteristic, and the interference characteristic parameters comprise a transmission mode, a Rank, a precoding matrix indicator, PMI, a resource utilization rate and a modulation and coding scheme, MCS;
wherein the parameter configuring module (301) is specifically configured to configure the transmission mode, the Rank, the PMI, the resource utilization rate and the MCS; wherein the configuring the MCS by the parameter configuring module is specifically: setting the MCS to a specific value or a preset value range;
a simulated interference generating module (302), configured to generate a simulated interference by using the interference characteristic parameters configured on the one or more simulated load templates;
**characterized in that**
the configuring the resource utilization rate by the parameter configuring module (301) is specifically: configuring a resource block, RB, utilization rate and a transmit power utilization rate of an interference cell, wherein if an RB utilization rate or a transmit power utilization rate that is scheduled by the interference cell and is of a real user equipment UE is lower than a preset threshold, simulated load is scheduled; or if an RB utilization rate or a transmit power utilization rate that is scheduled by the interference cell and is of a real UE is higher than a preset threshold, simulated load is invalid.

6. The apparatus according to claim5, wherein the configuring the transmission mode by the parameter configuring module (301) is specifically: configuring the transmission mode, and accepting or not accepting a restriction of MIMO, beam forming, an active antenna system, frequency selective scheduling, inter-cell interference coordination (ICIC) or a power class of an interference cell; and
the configuring the Rank and the PMI by the parameter configuring module (301) is specifically: according to the configured transmission mode, setting each of an Rank and a PMI that are corresponding to the transmission mode to a specific value or a preset value range.

7. The apparatus according to claim 5 or 6, wherein if multiple groups of interference characteristic parameters exist, the interference characteristic parameters further comprise a time domain polling granularity and/or a frequency domain polling granularity; and
the parameter configuring module (301) is further configured to configure the time domain polling granularity and/or the frequency domain polling granularity.

8. The apparatus according to claim 7, wherein the configuring the time domain polling granularity and/or the frequency domain polling granularity by the parameter configuring module (301) is specifically: separately setting a time domain polling granularity and/or a frequency domain polling granularity of each of the multiple groups of interference characteristic parameters to a specific value or a preset value range, wherein a preset value range of the time domain polling granularity is from 1 ms to infinity, and a preset value range of the frequency domain polling granularity is 1-100 RB.

9. The apparatus according to any one of claims 5 to 8, wherein the simulated interference generating module (302) is specifically configured to:
generate the simulated interference based on different transmission modes and according to a Rank and/or a PMI configured at an Radio Resource Control RRC, RRC, layer.

## Patentansprüche

1. Verfahren zum Erzeugen einer simulierten Störung, umfassend:
separates Konfigurieren (201) von Störungskenngrößenparametern auf einer oder mehreren simulierten Lastvorlagen, wobei die Störungskenngrößenparameter zum Simulatieren einer Störungsquelle oder einer Art von Störungsquelle verwendet werden, die eine selbe Störungskenngröße aufweist, und die Störungskenngrößenparameter einen Übertragungsmodus, einen Rang, einen Vorkodierungsmatrixindikator PMI, eine Ressourcenauslastungsrate und ein Modulations- und Codierungsschema MCS umfassen;
wobei das Konfigurieren von Störungskenngrößenparametern Folgendes umfasst:
Konfigurieren des Übertragungsmodus, des Rangs, des PMI, der Ressourcenauslastungsrate und des MCS;
wobei das Konfigurieren des MCS Folgendes umfasst; Setzen des MCS auf einen spezifischen Wert oder einen voreingestellten Wertebereich; und
Erzeugen (202) einer simulierten Störung durch Verwenden der Störungskenngrößenparameter, die auf der einen oder den mehreren simulierten Lastvorlagen konfiguriert sind;
**dadurch gekennzeichnet, dass**
das Konfigurieren der Ressourcenauslastungsrate Folgendes umfasst: Konfigurieren einer Ressourcenblock- bzw. RB-Auslastungsrate und einer Sendeleistungs-Auslastungsrate einer Störungszelle, wobei, wenn eine RB-Auslastungsrate oder eine Sendeleistungs-Auslastungsrate, die durch die Störungszelle eingeplant wird, kleiner als eine voreingestellte Schwelle ist, simulierte Last eingeplant wird; oder wenn eine RB-Auslastungsrate oder eine Sendeleistungs-Auslastungsrate, die durch die Störungszelle eingeplant wird, höher als eine voreingestellte Schwelle ist, simulierte Last ungültig wird.

2. Verfahren nach Anspruch 1, wobei
das Konfigurieren des Übertragungsmodus Folgendes umfasst: Konfigurieren des Übertragungsmodus und Annehmen oder Nichtannehmen einer Beschränkung von MIMO, Strahlformung, eines aktiven Antennensystems, frequenzselektiver Einplanung, Zwischenzellen-Störungskoordination (ICIC) oder einer Leistungsklasse einer Störungszelle; und
das Konfigurieren des Rangs und des PMI Folgendes umfasst: gemäß dem konfigurierten Übertragungsmodus wird jeder eines Rangs und eines PMI, die dem Übertragungsmodus entsprechen, auf einen spezifischen Wert oder einen voreingestellten Wertebereich gesetzt.

3. Verfahren nach einem der Ansprüche 1 bis 2, wobei, wenn mehrere Gruppen von Störungskenngrößenparametern existieren, die Störungskenngrößenparameter ferner eine Zeitbereichs-Abfragegranularität und/oder eine Frequenzbereichs-Abfragegranularität umfassen; und
das Konfigurieren von Störungskenngrößenparametern ferner Folgendes umfasst:
Konfigurieren der Zeitbereichs-Abfragegranularität und/oder der Frequenzbereichs-Abfragegranularität.

4. Verfahren nach Anspruch 3, wobei das Konfigurieren der Zeitbereichs-Abfragegranularität und/oder der Frequenzbereichs-Abfragegranularität Folgendes umfasst:
separates Einstellen einer Zeitbereichs-Abfragegranularität und/oder einer Frequenzbereichs-Abfragegranularität jeder der mehreren Gruppen von Störungskenngrößenparametern auf einen spezifischen Wert oder einen voreingestellten Wertebereich,
wobei ein voreingestellter Wertebereich der Zeitbereichs-Abfragegranularität von 1 ms bis unendlich ist und ein voreingestellter Wertebereich der *Frequenzbereichs-Abfragegranularität 1-100 RB ist.

5. Vorrichtung zum Erzeugen einer simulierten Störung, umfassend:
ein Parameterkonfiguriermodul (301), ausgelegt zum separaten Konfigurieren von Störungskenngrößenparametern auf einer oder mehreren simulierten Lastvorlagen,
wobei die Störungskenngrößenparameter zum Simulatieren einer Störungsquelle oder einer Art von Störungsquelle verwendet werden, die eine selbe Störungskenngröße aufweist, und die Störungskenngrößenparameter einen Übertragungsmodus, einen Rang, einen Vorkodierungsmatrixindikator PMI, eine Ressourcenauslastungsrate und ein Modulations- und Codierungsschema MCS umfassen;
wobei das Parameterkonfiguriermodul (301) spezifisch ausgelegt ist zum Konfigurieren des Übertragungsmodus, des Rangs, des PMI, der Ressourcenauslastungsrate und des MCS; wobei das Konfigurieren des MCS durch das Parameterkonfiguriermodul spezifisch Folgendes umfasst: Setzen des MCS auf einen spezifischen Wert oder einen voreingestellten Wertebereich;
ein Störungssimulationserzeugungsmodul (302), ausgelegt zum Erzeugen einer simulierten Störung durch Verwendung der Störungskenngrößenparameter, die auf der einen oder den mehreren simulierten Lastvorlagen konfiguriert sind;
**dadurch gekennzeichnet, dass**
das Konfigurieren der Ressourcenauslastungsrate durch das Parameterkonfiguriermodul (301) spezifisch Folgendes umfasst: Konfigurieren einer Ressourcenblock- bzw. RB-Auslastungsrate und einer Sendeleistungs-Auslastungsrate einer Störungszelle, wobei, wenn eine RB-Auslastungsrate oder eine Sendeleistungs-Auslastungsrate, die durch die Störungszelle eingeplant wird und von einem realen Benutzergerät UE ist, kleiner als eine voreingestellte Schwelle ist, simulierte Last eingeplant wird; oder wenn eine RB-Auslastungsrate oder eine Sendeleistungs-Auslastungsrate, die durch die Störungszelle eingeplant wird und von einem realen UE ist, höher als eine voreingestellte Schwelle ist, simulierte Last ungültig wird.

6. Vorrichtung nach Anspruch 5, wobei das Konfigurieren des Übertragungsmodus durch das Parameterkonfiguriermodul (301) spezifisch Folgendes umfasst:
Konfigurieren des Übertragungsmodus und Annehmen oder Nichtannehmen einer Beschränkung von MIMO, Strahlformung, eines aktiven Antennensystems, frequenzselektiver Einplanung, Zwischenzellen-Störungskoordination (ICIC) oder einer Leistungsklasse einer Störungszelle; und
das Konfigurieren des Rangs und des PMI, durch das Parameterkonfiguriermodul (301) spezifisch Folgendes umfasst: gemäß dem konfigurierten Übertragungsmodus wird jeder eines Rangs und eines PMI, die dem Übertragungsmodus entsprechen, auf einen spezifischen Wert oder einen voreingestellten Wertebereich gesetzt.

7. Vorrichtung nach Anspruch 5 oder 6, wobei, wenn mehrere Gruppen von Störungskenngrößenparametern existieren, die Störungskenngrößenparameter ferner eine Zeitbereichs-Abfragegranularität und/oder eine Frequenzbereichs-Abfragegranularität umfassen; und
das Parameterkonfiguriermodul (301) ferner zu Folgendem konfiguriert ist:
Konfigurieren der Zeitbereichs-Abfragegranularität und/oder der Frequenzbereichs-Abfragegranularität.

8. Vorrichtung nach Anspruch 7, wobei das Konfigurieren der Zeitbereichs-Abfragegranularität und/oder der Frequenzbereichs-Abfragegranularität durch das Parameterkonfiguriermodul (301) spezifisch Folgendes umfasst: separates Einstellen
einer Zeitbereichs-Abfragegranularität und/oder einer Frequenzbereichs-Abfragegranularität jeder der mehreren Gruppen von Störungskenngrößenparametern auf einen spezifischen Wert oder einen voreingestellten Wertebereich, wobei ein voreingestellter Wertebereich der Zeitbereichs-Abfragegranularität von 1 ms bis unendlich ist und ein voreingestellter Wertebereich der Frequenzbereichs-Abfragegranularität 1-100 RB ist.

9. Vorrichtung nach einem der Ansprüche 5 bis 8, wobei das Erzeugungsmodul (302) for simulierte Störung spezifisch ausgelegt ist zum:
Erzeugen der simulierten Störung auf der Basis verschiedener Übertragungsmodi und gemäß einem Rang und/oder einem PMI, der in einer "Radio Resource Control"- bzw. RRC-Schicht konfiguriert ist.

## Revendications

1. Procédé pour générer une interférence simulée, comprenant les étapes consistant à :
configurer séparément (201) des paramètres de caractéristiques d'interférence sur un ou plusieurs modèles de simulation de charge, les paramètres de caractéristiques d'interférence servant à simuler une source d'interférence ou un type de source d'interférence qui présente une même caractéristique d'interférence, et les paramètres de caractéristiques d'interférence comprenant un mode d'émission, un classement, un indicateur de matrice de précodage, PMI, un taux d'utilisation de ressource et un schéma de modulation et codage, MCS ;
la configuration des paramètres de caractéristiques d'interférence comprenant l'étape consistant à :
configurer le mode d'émission, le classement, le PMI, le taux d'utilisation de ressource et le MCS ;
la configuration du MCS comprenant l'étape consistant à : donner au MCS une valeur spécifique ou une plage de valeurs prédéfinie ; et
générer (202) une interférence simulée à l'aide des paramètres de caractéristiques d'interférence configurés sur l'un ou les modèles de simulation de charge ;
**caractérisé en ce que**
la configuration du taux d'utilisation de ressource comprend l'étape consistant à :
configurer un taux d'utilisation de bloc de ressources, RB, et un taux d'utilisation de puissance d'émission d'une cellule d'interférence, de telle manière que si un taux d'utilisation de RB ou un taux d'utilisation de puissance d'émission qui est planifié par la cellule d'interférence est inférieur à un seuil prédéfini, une charge simulée est planifiée ; ou si un taux d'utilisation de RB ou un taux d'utilisation de puissance d'émission qui est planifié par la cellule d'interférence est supérieur à un seuil prédéfini, la charge simulée est invalide.

2. Procédé selon la revendication 1, dans lequel :
la configuration du mode d'émission comprend les étapes consistant à : configurer le mode d'émission et accepter ou ne pas accepter une restriction des MIMO, une formation de faisceau, un système d'antenne actif, une planification sélective de fréquence, une coordination d'interférence inter-cellulaire (ICIC) ou une classe de puissance d'une cellule d'interférence ; et
la configuration du classement et du PMI comprend l'étape consistant à : en fonction du mode d'émission configuré, donner à l'un et l'autre d'un classement et d'un PMI qui correspondent au mode d'émission une valeur spécifique ou une plage de valeurs prédéfinie.

3. Procédé selon l'une des revendications 1 et 2, dans lequel, s'il existe plusieurs groupes de paramètres de caractéristiques d'interférence, les paramètres de caractéristiques d'interférence comprennent également une granularité d'interrogation de domaine temporel et/ou une granularité d'interrogation de domaine fréquentiel ; et
la configuration des paramètres de caractéristiques d'interférence comprend également l'étape consistant à : configurer la granularité d'interrogation de domaine temporel et/ou la granularité d'interrogation de domaine fréquentiel.

4. Procédé selon la revendication 3, dans lequel la configuration de la granularité d'interrogation de domaine temporel et/ou de la granularité d'interrogation de domaine fréquentiel comprend l'étape consistant à :
donner séparément à une granularité d'interrogation de domaine temporel et/ou à une granularité d'interrogation de domaine fréquentiel de chacun des multiples groupes de paramètres de caractéristiques d'interférence une valeur spécifique ou une plage de valeurs prédéfinie, une plage de valeurs prédéfinie de la granularité d'interrogation de domaine temporel allant de 1 ms à l'infini, et une plage de valeurs prédéfinie de la granularité d'interrogation de domaine fréquentiel allant de 1 à 100 RB.

5. Appareil pour générer une interférence simulée, comprenant :
un module de configuration de paramètres (301), conçu pour configurer séparément des paramètres de caractéristiques d'interférence sur un ou plusieurs modèles de simulation de charge, les paramètres de caractéristiques d'interférence servant à simuler une source d'interférence ou un type de source d'interférence qui présente une même caractéristique d'interférence, et les paramètres de caractéristiques d'interférence comprenant un mode d'émission, un classement, un indicateur de matrice de précodage, PMI, un taux d'utilisation de ressource et un schéma de modulation et codage, MCS ;
le module de configuration de paramètres (301) étant spécifiquement conçu pour configurer le mode d'émission, le classement, le PMI, le taux d'utilisation de ressource et le MCS ; la configuration du MCS par le module de configuration de paramètres consistant spécifiquement à :donner au MCS une valeur spécifique ou
une plage de valeurs prédéfinie ; et
un module de génération d'interférence simulée (302), conçu pour générer une interférence simulée à l'aide des paramètres de caractéristiques d'interférence configurés sur l'un ou les modèles de simulation de charge ;
**caractérisé en ce que**
la configuration du taux d'utilisation de ressource par le module de configuration de paramètres (301) consiste spécifiquement à :configurer un taux d'utilisation de bloc de ressources, RB, et un taux d'utilisation de puissance d'émission d'une cellule d'interférence, de telle manière que si un taux d'utilisation de RB ou un taux d'utilisation de puissance d'émission qui est planifié par la cellule d'interférence et qui est celui d'un équipement d'utilisateur, UE, réel est inférieur à un seuil prédéfinie, une charge simulée est planifiée ; ou si un taux d'utilisation de RB ou un taux d'utilisation de puissance d'émission qui est planifié par la cellule d'interférence et qui est celui d'un UE réel est supérieur à un seuil prédéfinie, la charge simulée est invalide.

6. Appareil selon la revendication 5, dans lequel la configuration du mode d'émission par le module de configuration de paramètres (301) consiste spécifiquement à :
configurer le mode d'émission et accepter ou ne pas accepter une restriction des MIMO, une formation de faisceau, un système d'antenne actif, une planification sélective de fréquence, une coordination d'interférence inter-cellulaire (ICIC) ou une classe de puissance d'une cellule d'interférence ; et
la configuration du classement et du PMI par le module de configuration de paramètres (301) consiste spécifiquement à :en fonction du mode d'émission configuré, donner à l'un et l'autre d'un classement et d'un PMI qui correspondent au mode d'émission une valeur spécifique ou une plage de valeurs prédéfinie.

7. Appareil selon la revendication 5 ou 6, dans lequel, s'il existe plusieurs groupes de paramètres de caractéristiques d'interférence, les paramètres de caractéristiques d'interférence comprennent également une granularité d'interrogation de domaine temporel et/ou une granularité d'interrogation de domaine fréquentiel ; et
le module de configuration de paramètres (301) est également conçu pour configurer la granularité d'interrogation de domaine temporel et/ou la granularité d'interrogation de domaine fréquentiel.

8. Appareil selon la revendication 7, dans lequel la configuration de la granularité d'interrogation de domaine temporel et/ou de la granularité d'interrogation de domaine fréquentiel par le module de configuration de paramètres (301) consiste spécifiquement à : donner séparément à une granularité d'interrogation de domaine temporel et/ou à une granularité d'interrogation de domaine fréquentiel de chacun des multiples groupes de paramètres de caractéristiques d'interférence une valeur spécifique ou une plage de valeurs prédéfinie, une plage de valeurs prédéfinie de la granularité d'interrogation de domaine temporel allant de 1 ms à l'infini, et une plage de valeurs prédéfinie de la granularité d'interrogation de domaine fréquentiel allant de 1 à 100 RB.

9. Appareil selon l'une quelconque des revendications 5 à 8, dans lequel le module de génération d'interférence simulée (302) est spécifiquement conçu pour :
générer l'interférence simulée d'après différents modes d'émission et en fonction d'un classement et/ou d'un PMI configurés au niveau d'une couche de contrôle de ressources radio, RRC.
